# EUROPÄISCHE PATENTSCHRIFT

(11) **EP 1 371 671 B1**
(45) Veröffentlichungstag und Bekanntmachung des Hinweises auf die Patenterteilung: **26.10.2005**
(21) Anmeldenummer: 03405392.6
(22) Anmeldetag: 30.05.2003
(51) Int. Cl.: C08F 290/06, C04B 26/02, C04B 28/00, C04B 40/06

(54) **Härterkomponente für eine mindestens zweikomponentige Mörtelmasse, Verfahren zu ihrer Herstellung und ihre Verwendung**
Curing agents for a mortar composition comprising at least two components, process for their production and their use
Durcisseurs pour composition de mortier comprenant au moin deux composants, pour leur préparation ainsi que leur utilisation

(30) Priorität: 14.06.2002 DE 10226613
(43) Veröffentlichungstag der Anmeldung: 17.12.2003
(73) Patentinhaber: HILTI Aktiengesellschaft, 9494 Schaan (LI)
(72) Erfinder: Bürgel Thomas, 86899 Landsberg am Lech (DE); Hettich Rainer, 81371 München (DE)
(74) Vertreter: Wildi, Roland

(56) Entgegenhaltungen:
- EP-A- 0 338 983
- DE-A- 4 231 161

## Beschreibung

Die vorliegende Erfindung betrifft eine Härterkomponente für eine mindestens zweikomponentige Mörtelmasse für die chemische Befestigungstechnik, ein Verfahren zu ihrer Herstellung und ihre Verwendung als Härterbestandteil einer zwei- oder mehrkomponentigen Mörtelmasse zur Befestigung von Konstruktionselementen in festem Untergrund, insbesondere von Ankerstangen. Betoneisen oder dergleichen in Bohrlöchern in Beton oder Stein.

Die für die chemische Befestigungstechnik verwendeten mindestens zweikomponentigen Mörtelmassen enthalten im allgemeinen in der einen Komponente, das heißt der Harzkomponente (Komponente "A") ein durch radikalische Polymerisation härtbares Harz, beispielsweise ein ungesättigtes Polyesterharz, ein Epoxyacrylatharz oder ein Urethanmethacrylatharz, welche Harze in copolymerisierbaren Reaktivverdünnern wie Styrol oder monomeren Methacrylaten gelöst sein können. Diese Harzkomponente enthält üblicherweise neben dem Harz weitere Additive, wie Beschleuniger, Inhibitoren und dergleichen, sowie auch Füllstoffe oder Verdickungsmittel.

Die zweite notwendige Komponente einer solchen Mörtelmasse für die chemische Befestigungstechnik, das heißt die Härterkomponente (Komponente "B), enthält den für die Polymerisation des härtbaren Harzes notwendigen Radikalbildner, beispielsweise ein Peroxid oder eine Azoverbindung. Da die für die radikalische Polymerisation der Harzkomponente erforderliche Menge des Radikalbildners sehr viel geringer ist als die Menge des Harzes in der Harzkomponente und darüber hinaus die Radikalbildner, namentlich die Peroxide, sich explosionsartig zersetzen können, enthält die Härterkomponente üblicherweise ein Trägermaterial oder Phlegmatisierungsmittel, mit welchem das Volumen der Härterkomponente auf einen vernünftigen Wert gebracht und die Explosionsgefahr des Radikalbildners herabgesetzt wird.

Schließlich ist es möglich, noch weitere chemisch mit der Harzkomponente und der Härterkomponente reagierende Bestandteile in einer oder mehreren weiteren Komponenten vorzusehen, in denen diese Bestandteile getrennt voneinander vorliegen, so daß keine vorzeitige Reaktion eintreten kann.

Bei der bestimmungsgemäßen Verwendung werden die in getrennten Behältern, beispielsweise Mehrkammer-Behältern, vorliegenden Komponenten, namentlich die Harzkomponente und die Härterkomponente unmittelbar vor der Anwendung vermischt, insbesondere dadurch, daß man sie aus diesen Behältern auspreßt, durch einen Statikmischer zum Vermischen der Bestandteile führt und dann die erhaltene Mischung in das Bohrloch in dem festen Untergrund einbringt. Anschließend wird das Befestigungselement, beispielsweise eine Ankerstange, eine Anschlußbewehrung, ein Betoneisen oder dergleichen, eingeführt und justiert, bevor die Mörtelmasse durch Polymerisation des Harzes in Gegenwart des Radikalbildners aushärtet.

Beim Vermischen der Härterkomponente mit der Harzkomponente ergeben sich Probleme dadurch, daß in der Regel die Menge des Härters, das heißt des Radikalbildners, wie des Peroxids, sehr viel geringer ist als die Menge des Harzes in der Harzkomponente, was die zur Erzielung gleichbleibender guter und reproduzierbarer Festigkeitswerte erforderliche homogene Durchmischung diese beiden Bestandteile erheblich erschwert. Andererseits sind gewisse Radikalbildner, beispielsweise Dibenzoylperoxid fest, so daß die Härterkomponente in der Regel ein Verdünnungsmittel enthält, um den Radikalbildner entweder zu lösen oder zu dispergieren und insgesamt in einem größeren Volumen vorzulegen, welches sich einfacher mit der Harzkomponente vermischen läßt. In diesem Zusammenhang sind Volumenverhältnisse von Harzkomponente zu Härterkomponente von 7:1 bis 1:1, vorzugsweise von 3:1 bis 1:1 bevorzugt, was allerdings zur Folge hat, daß der Härterkomponente nicht zu vernachlässigende Mengen an flüssigen Trägermaterialien zugesetzt werden müssen, um dieses Volumenverhältnis einzustellen.

Nach dem Stand der Technik werden zur Einstellung der Fließfähigkeit und der Konzentration des Radikalbildners in der Härterkomponente beziehungsweise des Volumens der Härterkomponente sogenannte Phlegmatisierungsmittel verwendet, die einerseits als Verdünnungsmittel und andererseits dazu dienen, eine unerwünschte Zersetzung der Radikalbildner zu vermeiden. Als solche Phlegmatisierungsmittel wurden bereits verschiedene Arten von nichtreaktiven Weichmachern, beispielsweise Dicarbonsäureester, wie Dioctylphthalat, Dioctyladipat, oder flüssige Polyester verwendet, wozu auf die DE-A-32 26 602 und EP-A-0 432 087 verwiesen werden kann.

Die WO 94/19397 schlägt als Phlegmatisierungsmittel reaktive Bestandteile wie flüssige Epoxide oder Isocyanate vor, die bei der Aushärtung der Mörtelmasse in die Harzmatrix eingebaut werden, während aus der DE-A-42 31 161 ein organisches/anorganisches Hybridsystem bekannt ist, welches es ermöglicht, als Phlegmatisierungsmittel Wasser einzusetzen. In beiden Fällen wird jedoch in der Harzkomponente ein geeigneter Reaktionspartner für das reaktive Trägermedium der Härterkomponente benötigt, da die aus diesem Stand der Technik bekannten Phlegmatisierungsmittel durch radikalische Polymerisation nicht in das gebildete Netzwerk eingebunden werden können.

Ein weiterer Nachteil des wässrigen Hybridsystems besteht darin, daß eine auf dieser Basis formulierte Härterkomponente bei Temperaturen von nur unwesentlich unter 0°C eingesetzt werden kann, da sie leicht einfriert, was ihren Einsatz auf einer Baustelle im Freien einschränkt.

Es hat sich nunmehr gezeigt, daß die herkömmlichen Ansätze zur Ausbildung der Härterkomponente einer solchen mindestens zweikomponentigen Mörtelmasse für die chemische Befestigungstechnik nicht voll zu befriedigen vermögen, weil entweder eine die Festigkeitseigenschaften der ausgehärteten Mörtelmasse beeinträchtigende Mengen von Trägermaterialien eingebracht werden müssen oder der Harzkomponente zusätzliche Bestandteile zugegeben werden müssen, die mit dem Trägermaterial der Härterkomponente reagieren, und daß weiterhin die Stabilität der herkömmlichen Härterkomponenten namentlich im Hinblick auf die Zersetzung des Radikalbildners unbefriedigend ist.

Die Aufgabe der vorliegenden Erfindung besteht somit darin, eine Härterkomponente für eine mindestens zweikomponentige Mörtelmasse für die chemische Befestigungskomponente anzugeben, mit der es nicht nur in einfacher Weise gelingt, die geringe Menge des Radikalbildners in das gewünschte Volumen eines Trägermaterials derart einzubringen, daß die erforderliche Fließfähigkeit und Konzentration des Radikalbildners erreicht wird, eine hohe Stabilität der Härterkomponente sichergestellt wird und gleichzeitig keine oder nur wenige zusätzliche Materialien in die Mörtelmasse eingeführt werden, wodurch bessere Festigkeitseigenschaften der ausgehärteten Mörtelmasse sichergestellt werden.

Es hat sich gezeigt, daß diese Aufgabe überraschenderweise dadurch gelöst werden kann, daß die Härterkomponente neben dem Radikalbildner Wasser und ein wasserlösliches, ethylenisch ungesättigtes und mit der organischen Harzkomponente copolymerisierbares Polyalkylenglykolderivat enthält.

Gegenstand der Erfindung ist daher die Härterkomponente gemäß Anspruch 1. Die Unteransprüche betreffen bevorzugte Ausführungsformen dieses Erfindungsgegenstandes, das Verfahren zur Herstellung dieser Härterkomponente sowie deren Verwendung als Härterbestandteil einer zwei- oder mehrkomponentigen Mörtelmasse zur Befestigung von Konstruktionselementen, wie insbesondere Ankerstangen, Betoneisen, Konstruktionselementen oder dergleichen in festen Untergründen, insbesondere in Stein oder Beton.

Die Erfindung betrifft insbesondere eine Härterkomponente für eine mindestens zweikomponentige Mörtelmasse für die chemische Befestigungstechnik, die gekennzeichnet ist durch einen Gehalt an mindestens einem Radikalbildner als Härter für eine organische Harzkomponente, Wasser und mindestens einem wasserlöslichen, ethylenisch ungesättigten und mit der organischen Harzkomponente copolymerisierbaren Polyalkylenglykolderivats mit einer Löslichkeit in Wasser bei 25°C von mindestens 10 g in 100 g Wasser der allgemeinen Formel (I):

R₂-A-O-R₁ (I)

in der R₁ eine Gruppe der Formel CH₂=CH-CH₂-, CH₂=CH-CO-O- oder CH₂= C(CH₃)-CO-O-, R₂ Wasserstoff, eine Alkylgruppe mit 1 bis 6 C-Atomen, vorzugsweise eine Methylgruppe, eine Sulfonatgruppe oder eine Gruppe der Formel CH₂=CH-CH₂-, CH₂=CH-CO-O- oder CH₂=C(CH₃)-CO-O-, und A eine geradkettige oder verzweigte, homopolymere oder copolymere, gegebenenfalls substituierte Polyoxyalkylengruppe bedeuten.

Bei der Gruppe A handelt es sich vorzugsweise um eine homopolymere oder copolymere Polyoxyalkylengruppe, die durch Homopolymerisation oder Copolymerisation von Ethylenoxid beziehungsweise Propylenoxid gebildet worden ist, wobei im Fall des Copolymerisats, die Ethylenoxid- beziehungsweise Propylenoxidgruppen statistisch oder in Blöcken oder aber auch in Form von gemischten Blöcken vorliegen können. Im Fall einer Polyoxyethylengruppe könnte diese durch die folgende Formel wiedergegeben werden:

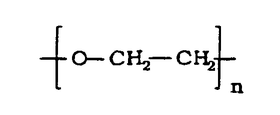

Im Fall eines homopolymeren Polyoxypropylrests kann die Gruppe A durch die folgenden Formeln wiedergegeben werden:

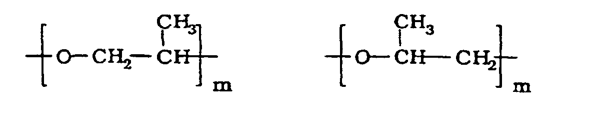

Gemäß einer bevorzugten Ausführungsform steht die Gruppe A für eine statistisch und/oder in Blöcken aufgebaute, copolymere, gegebenenfalls substituierte Polyoxyalkylengruppe. Einer besonders bevorzugten Ausführungsform entsprechend ist die gegebenenfalls substiuierte Polyoxyalkylengruppe A aus Polyoxyethylenresten und/oder Polyoxypropylenresten aufgebaut, die homopolymer oder copolymer sein können, wobei die copolymeren Reste statistisch oder in Form von Blöcken angeordnet sind. Vorzugsweise entspricht das Polyalkylenglykolderivat einer der nachstehenden Formeln (II) bis (IV):

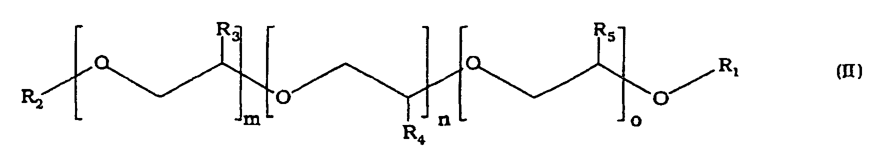

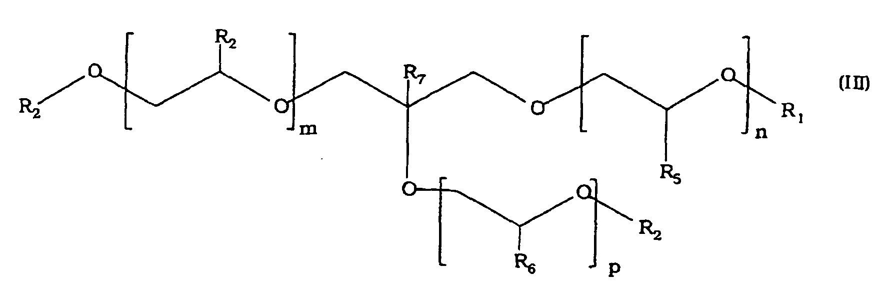

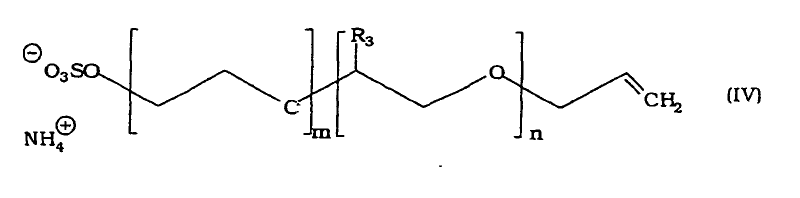

in denen R₁ und R₂ die oben angegebenen Bedeutungen besitzen, R₃, R₄, R₅, R₆ und R₇ unabhängig voneinander Wasserstoff oder Alkylgruppen mit 1 bis 6 C-Atomen, vorzugsweise Wasserstoff oder Methylgruppen, und n, m, o und p mit Werten von 0 bis 200, vorzugsweise mit Werten von 0 bis 100, unabhängig voneinander ganze Zahlen mit Werten von 0 bis 200 mit der Maßgabe bedeuten, das die Summe n + m + o + p = 5 bis 300, vorzugsweise 5 bis 200, beträgt, wobei gemäß einer besonders bevorzugten Ausführungsform der Erfindung die Molmasse des Polyalkylderivats im Bereich von 250 bis 20.000 g/Mol, noch bevorzugter 500 bis 5000 g/Mol liegt.

Erfindungsgemäß besonders bevorzugte Polyalkylenglykolderivate sind aus der Polyethylenglykolallylether, Polyethylenglykolacrylate. Polyethylenglykolmethacrylate. Methoxypolyethylenglykol-1100-methacrylat, Polyethylenglykoldimethacrylat und/oder Polyethylenglykol-co-propylenglykolallylether mit Molmassen von 250 bis 5000 g/Mol umfassenden Gruppe ausgewählt, und insbesondere Polyethylenglykol-750-allylether, Polyethylenglykol-5000-allylether und Methoxypolyethylenglykol-560-methacrylat.

Die erfindungsgemäß eingesetzten Polyalkylenglykolderivate sind entweder bekannt und/oder im Handel erhältlich oder können aufgrund von den dem Fachmann aus der Literatur bekannten chemischen Syntheseverfahren hergestellt werden, namentlich durch Polykondensation von Ethylenoxid und/oder Propylenoxid bis zu dem gewünschten Molekulargewicht und Einführen der Reste R₁ und R₂. Man kann auch von Allylalkohol oder Acrylsäure beziehungsweise Methacrylsäure ausgehen und die Polyoxyalkylengruppe A durch Homopolymerisation oder Copolymerisation von Ethylenoxid und Propylenoxid aufbauen. Wenn diese Polykondensation von einem mehrwertigen Alkohol ausgeht, beispielsweise 1,4-Butandiol oder 1,6-Hexandiol, Trimethylolpropan oder Pentaerythrit, erhält man verzweigte Polyalkylenderivate der obigen Formel (III).

Die erfindungsgemäß bevorzugt eingesetzten und im Handel erhältlichen Verbindungen der obigen Formel (II) sind beispielsweise Polyethylenglykolallylether, die unter der Bezeichnung Polyglykol A500, A750, A1100, A5000, sowie Polyethylenglykol-copropylenglykol-allylether, der unter der Bezeichnung Emulsogen AL250 ebenfalls von der Firma Clariant vertrieben werden; Polyethylenglykolacrylate, die unter der Bezeichnung Sartomer, Polyethylenglykolmethacrylate, die unter der Bezeichnung CD550 von der Firma Cray Valley vertrieben werden und Polyethylendimethacrylat, welches unter der Bezeichnung Sartomer 252 ebenfalls von der Firma Cray Valley vertrieben wird; und Methoxypolyethylenglykol-1100-methacrylat, das von der Firma Merck erhältlich ist.

Die erfindungsgemäße Härterkomponente kann als Radikalbildner ein Peroxid und/oder eine Azoverbindung, vorzugsweise ein organisches Peroxid oder eine organische Azoverbindung enthalten. Besonders bevorzugte Peroxide sind Alkylperoxide, Dialkylperoxide, Diacylperoxide, Alkylhydroperoxide, Hydroperoxide. Perocarbonate, Perketale und/oder anorganische Peroxide. Gemäß einer am meisten bevorzugten Ausführungsform enhält die Härter-komponente als Radikalbildner Diacetylperoxid, Di-p-chlorobenzoylperoxid, Di-t-butylperoxid, Cumolhydroperoxid, Phthaloylperoxid, Succinylperoxid, Dilaurylperoxid, Acetylcyclohexansulfonylperoxid, t-Butylperbenzoat, t-Butylperoctoat. Cyclohexanpercarbonat, Bis(4-t-butylcyclohexyl)percarbonat, ein Siliciumperoxid. Acetylacetonperoxid, Cyclohexanonperoxid, Methylethylketonperoxid, Dibenzoylperoxid, Dilauroylperoxid und/oder Azobisisobutyronitril. Für die Verarbeitung in einem Temperaturbereich von -25°C bis +60°C und damit auf den üblichen Baustellen im Freien ist besonders bevorzugt der Einsatz von Diacylperoxiden, wie Dibenzoylperoxid oder Dilauroylperoxid. Die erfindungsgemäß bevorzugte Azoverbindung ist Azobisisobutyronitril.

Neben den zwingend notwendigen Bestandteilen Radikalbildner, Wasser und dem Polylalkylenglykolderivat kann die erfindungsgemäße Härterkomponente gegebenenfalls zusätzlich übliche organische und/oder anorganische Füllstoffe, Verdickungsmittel, Thixotropiermittel, nicht reaktive Lösungsmittel, Mittel zur Verbesserung der Fließfähigkeit, Beschleuniger, Netzmittel und/oder Stabilisatoren enthalten. Die Füllstoffe bestehen vorzugsweise aus Teilchen aus Quarz, Quarzgut, Korund, Calciumcarbonat, Calciumsulfat, Glas und/oder organischen Polymeren unterschiedlichster Größe und Form, beispielsweise als Sand oder Mehl, in Form von Kugeln oder Hohlkugeln, aber auch in Form von Fasern aus organischen Polymeren, wie beispielsweise Polymethylmethacrylat. Polyester, Polyamid oder auch in Form von Mikrokugeln aus Polymeren (Perpolymerisaten).

Als Verdickungsmittel oder Thixotropiermittel sind solche auf der Grundlage von Silikaten, Bentonit, Laponit, pyrogener Kieselsäure, Polyacrylaten und/oder Polyurethanen bevorzugt.

Die Menge des einzusetzenden Polyalkylenglykolderivats sowie die für die Flexibilisierung notwendige Wassermenge hängt im wesentlichen von der Molmasse der verwendeten Verbindung ab, wobei der Fachmann ohne weiteres in der Lage ist, das richtige Verhältnis dieser Bestandteile und auch der gegebenenfalls anzuwendenden Bestandteile derart auszuwählen, daß die Härterkomponente die für die Dosierung und das Ausbringen über den Statikmischer erforderliche Viskosität und Fließfähigkeit besitzt.

Gemäß einer bevorzugten Ausführungsform enthält die Härterkomponente:
a) 1 bis 30 Gew.-%, vorzugsweise 5 bis 20 Gew.-% mindestens eines Radikalbildners, vorzugsweise Dibenzylperoxid oder Dilaurylperoxid,
b) 5 bis 50 Gew.-%, vorzugsweise 10 bis 40 Gew.-% Wasser,
c) 3 bis 50 Gew.-%, vorzugsweise 10 bis 40 Gew.-% mindestens eines Polyalkylenglykolderivats wie es oben definiert worden ist, insbesondere aber Polyethylenglykol-750-allylether, Polyethylenglykol-5000-allylether und/oder Methoxypolyethylenglykol-560-methacrylat,
d) 0 bis 70 Gew.-%, vorzugsweise 5 bis 50 Gew.-% mindestens eines Füllstoffs.
e) 0 bis 10 Gew.-% mindestens eines Verdickungsmittels oder Thixotropiermittels, und
f) 0 bis 10 Gew.-% mindestens eines Vertreters der nicht reaktiven Lösungsmittel. Mittel zur Verbesserung der Fließfähigkeit. Beschleuniger, Netzmittel und/oder Stabilisatoren umfassenden Gruppe.

Die erfindungsgemäße Härterkomponente wird nach der beanspruchten Verfahrensweise dadurch hergestellt, daß man die Bestandteile homogen vermischt und durch Auswahl der Menge an Polyalkylenglykolderivat und Wasser sowie gegebenenfalls eines Lösungsmittels das gewünschte Volumen und die angestrebte Fließfähigkeit einstellt.

Die erfindungsgemäße Härterkomponente kann in einer zweikomponentigen oder mehrkomponentigen Mörtelmasse in Kombination mit beliebigen Harzkomponenten, welche radikalisch polymerisierbare Harze enthalten, eingesetzt werden, beispielsweise Harzkomponenten auf Basis von ungesättigten Polyestern, Vinylestern, Epoxyacrylaten, Urethanmethacrylaten, Vinylethern, Allylethern, die gegebenenfalls in Mischung mit Reaktivverdünnern, die ethylenisch ungesättigte Strukturelemente enthalten, wie beispielsweise Styrol, Divinylbenzol, Acryl- und/oder Methacrylsäure oder deren Ester, beispielsweise Methyl(meth)acrylat, Butyl(meth)acrylat, Butandioldi(meth)acrylat, Ethylenglykoldi(meth)acrylat, Trimethylolpropantri(meth)acrylat, Pentaerythrittetra(meth)acrylat sowie homologen Derivaten davon, sowie weiterer funktioneller Gruppen enthaltender Monomere, wie Hydroxyethyl- oder Hydroxypropyl(meth)acrylat, Aminoethyl(meth)acrylat, Acetoacetatoethyl(meth)-acrylat, Acrylamid-Derivate davon, Butylvinylether, Diallyladipat, Diethylenglykoldivinylether, Hydroxybutylvinylether und dergleichen mehr.

Die Harzkomponente kann zusätzlich die üblicherweise verwendeten Füllstoffe und/oder Verstärkungsmittel enthalten, wie beispielsweise Siliciumdioxid, insbesondere pyrogenes Siliciumdioxid, Quarzsand und/oder Quarzmehl, Glaskügelchen. Glashohlkügelchen, Glimmer, Zement, Caciumcarbonat und/oder Calciumsulfat, Kurund. Carbide, Metallteilchen, Schwerspat, synthetische und/oder natürliche Fasern etc., ebenso wie Verdickungsmittel und Thixotropiermittel wie sie oben bereits angesprochen worden sind oder aber auch Pigmente und Farbstoffe.

Weiterhin ist es möglich, eine hydraulisch abbindende Verbindung, beispielsweise Zement, vorzugsweise Portlandzement, Aluminatzement und/oder Gips als Füllstoff in die Harzkomponente einzubringen, um in dieser Weise auch das oder einen Teil des in der Härterkomponente enthaltenen Wassers zu binden.

Die erfindungsgemäße Härterkomponente und die Harzkomponente werden nach ihrer getrennten Herstellung vorzugsweise in Mehrkammer-Behältern aufbewahrt, aus denen sie mit Hilfe mechanischer Einrichtungen oder mit Hilfe eines Treibmittels ausgepreßt durch eine Mischeinrichtung, vorzugsweise einen Statikmischer, geführt werden. Die aus dem Statikmischer austretende aushärtende Mörtelmasse wird direkt in ein in dem festen Untergrund angeordnetes Bohrloch eingeführt, in welches dann das zu befestigende Konstruktionselement, beispielsweise eine Ankerstange, eingeführt wird. Bei einer Verarbeitungszeit von beispielsweise 10 Minuten und einer Aushärtungszeit von mindestens einer Stunde erhält man ausgezeichnete Festigkeitswerte des in dem Bohrloch befestigten Konstruktionselements.

Es hat sich gezeigt, daß durch die erfindungsgemäße Verwendung des definierten Polyalkylenglykolderivats nicht nur das Volumen und die Fließfähigkeit der Härterkomponente in der Weise eingestellt werden können, daß eine einfache und homogene Durchmischung mit der Harzkomponente ohne weiteres mit Hilfe eines Statikmischers erreicht werden kann, sondern gleichzeitig auch die Stabilität der den Radikalbildner enthaltenden Härterkomponente während der Lagerung sichergestellt wird und gleichzeitig hohe Lastwerte der ausgehärteten Mörtelmasse erreicht werden.

Die folgenden Beispiele dienen der weiteren Erläuterung der Erfindung.

### BEISPIEL 1

Man bereitet die Harzkomponente und die erfindungsgemäße Härterkomponente einer zweikomponentigen Mörtelmasse durch Vermischen der homogenen folgenden Bestandteile:

| | |
|---|---|
| Harzkomponente A | 29 Gew.-% Epoxyacrylat, |
| | 20 Gew.-% Butandioldimethacrylat, |
| | 19 Gew.-% Zement, |
| | 28 Gew.-% Quarzsand, |
| | 2,2 Gew.-% pyrogene Kieselsäure; |
| | 1,5 Gew.-% Dimethyl-p-toluidin |
| | 0,3 Gew.-% Ionol (Butylhydroxytoluol |
| | |
| Härterkomponente B | 15 Gew.-% Polyethylenglykol-750-allylether, |
| | 10 Gew.-% Polyethylenglykol-5000-allylether, |
| | 20 Gew.-% Wasser, |
| | 15 Gew.-% Dibenzoylperoxid (75 % wässrig), |
| | 35 Gew.-% Calciumcarbonat und |
| | 5 Gew.-% pyrogener Kieselsäure. |

Nach der getrennten Herstellung der beiden Komponenten werden diese in einem Volumenverhältnis von 3:1 in einem Statikmischer vermischt und in ein vorbereitetes Bohrloch (Durchmesser 14 mm in Beton C20, 130 mm tief) eingebracht. Man setzt eine Ankerstange (M12, Stahlqualität 10.9) ein und bestimmt nach einer Aushärtzeit von einem Tag bei Raumtemperatur (25°C) die Ausziehkraft der Ankerstange, wobei man ein hydraulisches Werkzeug verwendet, mit welchem die Ausziehkraft der Ankerstange gemessen werden kann. Die hierbei gemessene Ausziehkraft beträgt 61 kN.

### BEISPIEL 2

Man bereitet aus den folgenden Bestandteilen eine Harzkomponente A und eine Härterkomponente B:

| | |
|---|---|
| Harzkomponente A | 20 Gew.-% Urethanmethacrylat, |
| | 18 Gew.-% Butandioldimethacrylat, |
| | 4,8 Gew.-% Isobornylmethacrylat, |
| | 10 Gew.-% Methylmethacrylat, |
| | 42 Gew.-% Quarzsand, |
| | 3,4 Gew.-% pyrogene Kieselsäure; |
| | 1,5 Gew.-% Dimethyl-m-toluidin |
| | 0,3 Gew.-% Ionol (Butylhydroxytoluol) |
| | |
| Härterkomponente B | 30 Gew.-% Methoxypolyethylenglykol-560-methacrylat, |
| | 20 Gew.-% Wasser, |
| | 10 Gew.-% Dibenzoylperoxid (75 % wässrig), |
| | 35 Gew.-% Glasmikrokugeln und |
| | 5 Gew.-% pyrogener Kieselsäure. |

Nach der Herstellung der beiden Komponenten vermischt man diese in einem Volumenverhältnis von 5:1 und bestimmt nach der in Beispiel 1 beschriebenen Weise die Ausziehkraft einer unter Verwendung dieser Mörtelmasse gesetzten Ankerstange M12 mit 79 kN.

### BEISPIEL 3

Man bereitet aus den folgenden Bestandteilen eine Harzkomponente A und eine Härterkomponente B:

| | |
|---|---|
| Harzkomponente A | 30 Gew.-% ungesättigter Polyester, |
| | 20 Gew.-% Styrol, |
| | 5,2 Gew.-% Divinylbenzol, |
| | 40 Gew.-% Quarzsand sowie |
| | 3 Gew.-% pyrogener Kieselsäure; |
| | 1,5 Gew.-% Dimethylanilin |
| | 0,3 Gew.-% Ionol (Butylhydroxytoluol) |
| | |
| Härterkomponente B | 35 Gew.-% Polyethylenglykol-500-allylether, |
| | 10 Gew.-% Wasser, |
| | 15 Gew.-% Dibenzoylperoxid (75 % wässrig), |
| | 35 Gew.-% Glasmikrokugeln und |
| | 5 Gew.-% pyrogener Kieselsäure. |

Nach der Herstellung der beiden Komponenten vermischt man diese in einem Volumenverhältnis von 3:1 und bestimmt nach der in Beispiel 1 beschriebenen Weise die Ausziehkraft einer unter Verwendung dieser Mörtelmasse gesetzten Ankerstange M12 mit 68 kN.

## Patentansprüche

1. Härterkomponente für eine mindestens zweikomponentige Mörtelmasse für die chemische Befestigungstechnik, **gekennzeichnet durch** einen Gehalt an
a) mindestens einem Radikalbildner als Härter für eine organische Harzkomponente:
b) Wasser und
c) mindestens einem wasserlöslichen, ethylenisch ungesättigten und mit der organischen Harzkomponente copolymerisierbaren Polyalkylenglykolderivat mit einer Löslichkeit in Wasser bei 25°C von mindestens 10 g in 100 g Wasser der allgemeinen Formel I:
R₂-A-O-R₁ (I)
in der
R₁ eine Gruppe der Formel CH₂=CH-CH₂-, CH₂=CH-CO-O- oder CH₂=C(CH₃)-CO-O-,
R₂ Wasserstoff, eine Alkylgruppe mit 1 bis 6 C-Atomen, eine Sulfonatgruppe oder eine Gruppe der Formel CH₂=CH-CH₂-, CH₂=CH-CO-O- oder CH₂= C(CH₃)-CO-O-, und
A eine geradkettige oder verzweigte, homopolymere oder copolymere, gegebenenfalls substituierte Polyoxyalkylengruppe bedeuten.

2. Härterkomponente nach Anspruch 1, **dadurch gekennzeichnet, daß** die Gruppe A eine statistisch und/oder in Blöcken aufgebaute, copolymere, gegebenenfalls substituierte Polyoxyalkylengruppe bedeutet.

3. Härterkomponente nach Anspruch 1 oder 2, **dadurch gekennzeichnet, daß** die gegebenenfalls substituierte Polyoxyalkylengruppe A aus Polyoxyethylenresten und/oder Polyoxypropylenresten aufgebaut ist.

4. Härterkomponente nach mindestens einem der Ansprüche 1 bis 3, **dadurch gekennzeichnet, daß** das Polyalkylenglykolderivat einer der allgemeinen Formeln (II) bis (IV) entspricht: 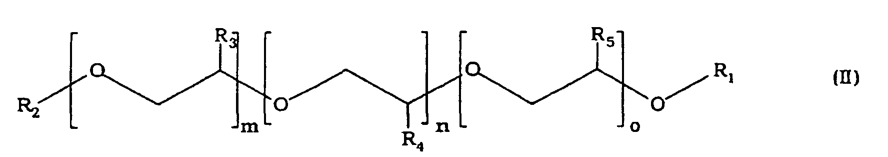 oder 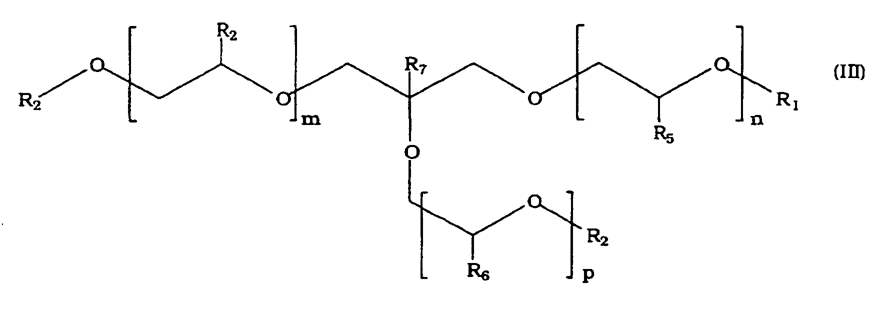 oder 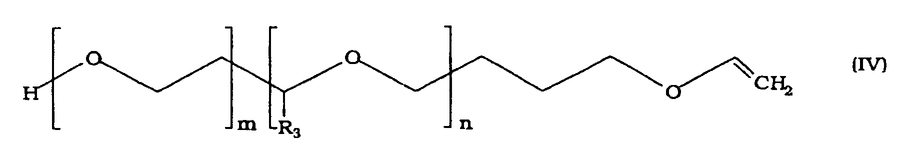 in denen
R₁ und R₂ die in Anspruch angegebenen Bedeutungen besitzen
R₃, R₄, R₅, R₆ und R₇ unabhängig voneinander Wasserstoff oder Alkylgruppen mit 1 bis 6 C-Atomen und
n, m, o und p unabhängig voneinander ganze Zahlen mit Werten von 0 bis 200 mit der Maßgabe bedeuten, das die Summe n + m + o + p = 5 bis 300 beträgt.

5. Härterkomponente nach mindestens einem der vorhergehenden Ansprüche, **dadurch gekennzeichnet, daß** sie ein Polyalkylenglykolderivat ausgewählt aus der Polyethylenglykolallylether, Polyethylenglykolacrylate, Polyethylenglykolmethacrylate, Methoxypolyethylenglykol-1100-methacrylat, Polyethylenglykoldimethacrylate und/oder Polyethylenglykol-co-propylenglykol-allylether mit Molmassen von 250 bis 5000 g/Mol umfassenden Gruppe enthält.

6. Härterkomponente nach mindestens einem der vorhergehenden Ansprüche, **dadurch gekennzeichnet, daß** sie als Polyalkylenglykolderivat einen Vertreter der Polyethylenglykol-750-allylether, Polyethylenglykol-5000-allylether und/oder Methoxypolyethylenglykol-560-methacrylat umfassenden Gruppe enthält.

7. Härterkomponente nach mindestens einem der vorhergehenden Ansprüche, **dadurch gekennzeichnet, daß** sie als Radikalbildner ein Peroxid oder eine Azoverbindung enthält.

8. Härterkomponente nach Anspruch 7, **dadurch gekennzeichnet, daß** sie als Radikalbildner ein organisches Peroxid und/oder eine organische Azoverbindung enthält.

9. Härterkomponente nach Anspruch 8, **dadurch gekennzeichnet, daß** sie als Radikalbildner ein Alkylperoxid, ein Dialkylperoxid, ein Diacylperoxid ein Alklyhydroperoxid, ein Hydroperoxid, ein Percarbonat, ein Perketal und/oder ein anorganisches Peroxid enthält.

10. Härterkomponente nach Anspruch 9, **dadurch gekennzeichnet, daß** sie als Radikalbildner Diacetylperoxid, Di-p-chlorobenzoylperoxid, Di-t-butylperoxid, Cumolhydroperoxid, Phthaloylperoxid, Succinylperoxid, Dilaurylperoxid, Acetylcyclohexansulfonylperoxid, t-Butylperbenzoat, t-Butylperoctoat, Cyclohexanpercarbonat, Bis(4-t-butylcyclohexyl)percarbonat, ein Siliciumperoxid, Acetylacetonperoxid, Cyclohexanonperoxid, Methylethylketonperoxid, Dibenzoylperoxid, Dilauroylperoxid und/oder Azobisisobutyronitril enthält.

11. Härterkomponente nach mindestens einem der vorhergehenden Ansprüche, **dadurch gekennzeichnet, daß** sie zusätzlich organische und/oder anorganische Füllstoffe, Verdickungsmittel, Thixotropiermittel, nicht reaktive Lösungsmittel. Mittel zur Verbesserung der Fließfähigkeit, Beschleuniger, Netzmittel und/oder Stabilisatoren enthält.

12. Härterkomponente nach Anspruch 11, **dadurch gekennzeichnet, daß** sie als organischen oder anorganischen Füllstoff Teilchen aus Quarz. Quarzgut. Korund, Calciumcarbonat, Calciumsulfat, Glas und/oder einem organischen Polymer enthält.

13. Härterkomponente nach Anspruch 12, **dadurch gekennzeichnet, daß** die Füllstoffteilchen unregelmäßig geformt, kugelförmig, hohlkugelförmig und/oder faserförmig sind.

14. Härterkomponente nach Anspruch 12 oder 13, **dadurch gekennzeichnet, daß** die Füllstoffteilchen aus einem Polymer, vorzugsweise Polymethylmethacrylat, einem Polyester und/oder einem Polyamid bestehen.

15. Härterkomponente nach Anspruch 11, **dadurch gekennzeichnet, daß** sie ein Verdickungsmittel oder Thixotropiermittel auf der Grundlage von Silikaten, Bentonit, Laponit, pyrogener Kieselsäure, Polyacrylaten und/oder Polyurethanen enthält.

16. Härterkomponente nach mindestens einem der vorhergehenden Ansprüche, **gekennzeichnet durch** einen Gehalt an
a) 1 bis 30 Gew.-% mindestens eines Radikalbildners gemäß den Ansprüchen 7 bis 10,
b) 5 bis 50 Gew.-% Wasser,
c) 3 bis 50 Gew.-% mindestens eines Polyalkylenglykolderivats gemäß den Ansprüchen 1 bis 6,
d) 0 bis 70 Gew.-% mindestens eines Füllstoffs gemäß den Ansprüchen 12 bis 14,
e) 0 bis 10 Gew.-% mindestens eines Verdickungsmittels oder Thixotropiermittels gemäß Anspruch 15 und
d) 0 bis 10 Gew.-% mindestens eines Vertreters der nicht reaktive Lösungsmittel. Mittel zur Verbesserung der Fließfähigkeit, Beschleuniger, Netzmittel und/oder Stabilisatoren umfassenden Gruppe.

17. Verfahren zur Herstellung der Härterkomponente nach mindestens einem der vorhergehenden Ansprüche, **dadurch gekennzeichnet, daß** man die mindestens einen Radikalbildner, Wasser, mindestens ein Polyalkylenglykolderivat, gegebenenfalls mindestens einen Füllstoff, gegebenenfalls mindestens ein Verdickungsmittel oder Thixotropiermittel und mindestens einen Vertreter der nicht reaktive Lösungsmittel, Mittel zur Verbesserung der Fließfähigkeit, Beschleuniger, Netzmittel und/oder Stabilisatoren umfassenden Gruppe homogen vermischt und durch Auswahl der Menge des Polyalkylenglykolderivat, von Wasser und gegebenenfalls eines Lösungsmittels auf das gewünschte Volumen und die angestrebte Fließfähigkeit einstellt.

18. Verwendung der Härterkomponente nach mindestens einem der vorhergehenden Ansprüche als Härterbestandteil einer zwei- oder mehrkomponentigen Mörtelmasse zur Befestigung von Konstruktionselementen in festem Untergrund.

## Claims

1. A hardener component for an at least two-component mortar composition for chemical fixing technology, **characterised by** a content of
a) at least one radical former as a hardener for an organic resin component;
b) water, and
c) at least one water-soluble, ethylenically unsaturated polyalkylene glycol derivative which is copolymerisable with the organic resin component and which has a solubility in water at 25°C of at least 10 g in 100 ml water, of general formula I:
R₂-A-O-R₁ (I)
in which
R₁ denotes a group of formula CH₂=CH-CH₂, CH₂=CH-CO-O- or CH₂=C(CH₃)COO-,
R₂ denotes hydrogen, an alkyl group with 1 to 6 C atoms, a sulphonate group or a group of formula CH₂=CH-CH₂, CH₂=CH-CO-O- or CH₂=C(CH₃)CO-O-, and
A denotes a straight-chain or branched, homopolymeric or copolymeric, optionally substituted polyoxyalkylene group.

2. A hardener component according to claim 1, **characterised in that** group A denotes a copolymeric, optionally substituted polyoxyalkylene group which is built up randomly and/or in blocks.

3. A hardener component according to claim 1 or 2, **characterised in that** the optionally substituted polyoxyalkylene group A is built up from polyoxyethylene residues and/or polyoxypropylene residues.

4. A hardener component according to at least one of claims 1 to 3, **characterised in that** the polyalkylene glycol derivative corresponds to one of general formulae (II) to (IV): 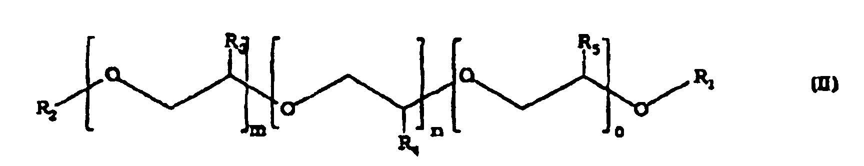 or 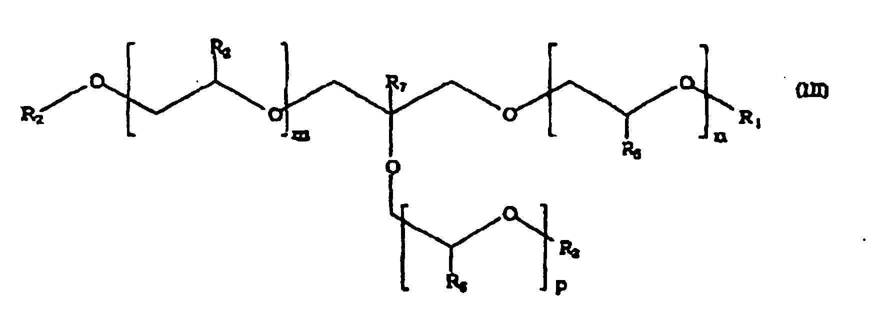 or 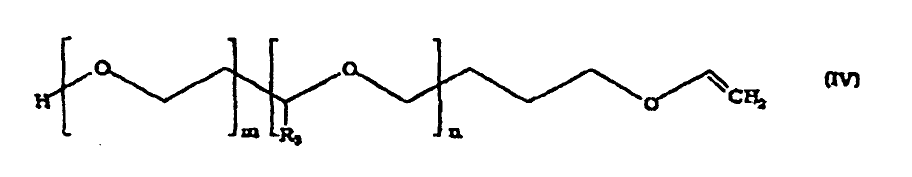 in which
R₁ and R₂ have the meanings given in claim 1,
R₃, R₄, R₅, R₆ and R₇, independently of each other, denote hydrogen or alkyl groups with 1 to 6 C atoms, and
n, m o and p, independently of each other, denote integers with values from 0 to 200, with the proviso that the sum n + m + o + p = 5 to 300.

5. A hardener component according to at least one of the preceding claims, **characterised in that** that it contains a polyalkylene glycol derivative selected from polyethylene glycol allyl ethers, polyethylene glycol acrylates, polyethylene glycol methacrylates, methoxypolyethylene glycol-1100-methacrylate, polyethylene glycol dimethacrylate and/or a group comprising polyethylene glycol-co-propylene glycol-allyl ethers with molecular weights from 250 to 5000 g/mol.

6. A hardener component according to at least one of the preceding claims, **characterised in that** it contains, as the group comprising a polyalkylene glycol derivative, a representative of a group comprising polyethylene glycol-750-allyl ether, polyethylene glycol 5000 allyl ether and/or methoxypolyethylene glycol 560 methacrylate.

7. A hardener component according to at least one of the preceding claims, **characterised in that** it contains a peroxide or an azo compound as a radical former.

8. A hardener component according to claim 7, **characterised in that** it contains an organic peroxide and/or an organic azo compound as a radical former.

9. A hardener component according to claim 8, **characterised in that** it contains, as a radical former, an alkyl peroxide, a dialkyl peroxide, a diacyl peroxide, an alkyl hydroperoxide, a hydroperoxide, a percarbonate, a perketal and/or an inorganic peroxide.

10. A hardener component according to claim 8, **characterised in that** it contains, as a radical former, diacetyl peroxide, di-p-chlorobenzoyl peroxide, di-t-butyl peroxide, cumene hydroperoxide, phthaloyl peroxide, succinyl peroxide, dilauryl peroxide, acetylcyclohexanesulphonyl peroxide, t-butyl perbenzoate, t-butyl peroctoate, cyclohexane percarbonate, bis(4-t-butylcyclohexyl) percarbonate, a silicon peroxide, acetylacetone peroxide, cyclohexanone peroxide, methyl ethyl ketone peroxide, dibenzoyl peroxide, dilauroyl peroxide and/or azobisisobutyronitrile.

11. A hardener component according to at least one of the preceding claims, **characterised in that** it additionally contains organic and/or inorganic fillers, thickeners, thixotropy agents, non-reactive solvents, means for improving flowability, accelerators, crosslinking agents and/or stabilisers.

12. A hardener component according to claim 11, **characterised in that** it contains, as an organic or inorganic filler, particles of quartz, vitreous fused silica, corundum, calcium carbonate, calcium sulphate, glass and/or an organic polymer.

13. A hardener component according to claim 12, **characterised in that** the filler particles are irregularly shaped, spherical, hollow spherical and/or fibrous.

14. A hardener component according to claim 12 or 13, **characterised in that** the filler particles consist of a polymer, preferably polymethyl methacrylate, a polyester and/or a polyamide.

15. A hardener component according to claim 11, **characterised in that it** contains a thickener or thixotropic agent based on silicates, bentonite, laponite, pyrogenic silica, polyacrylates and/or polyurethanes.

16. A hardener component according to at least one of the preceding claims, **characterised by** a content of
a) 1 to 30 % by weight of at least one radical former according to claims 7 to 10,
b) 5 to 50 % by weight water,
c) 3 to 50 % by weight of at least one polyalkylene glycol derivative according to claims 1 to 6,
d) 0 to 70 % by weight of at least one filler according to claims 12 to 14,
e) 0 to 10 % by weight of at least one thickener or thixotropic agent according to claim 15, and
d) 0 to 10 % by weight of at least one representative of nonreactive solvents, means for improving flowability, accelerators, a group comprising crosslinking agents and/or stabilisers.

17. A method of producing the hardener component according to at least one of the preceding claims, **characterised in that** the at least one radical former, water, at least one polyalkylene glycol derivative, at least one filler, optionally at least one thickener or thixotropic agent and at least one representative of the nonreactive solvents, means for improving flowability, accelerators, a group comprising crosslinking agents and/or stabilisers are homogeneously mixed and by selecting the amount of the polyalkylene glycol derivative, is brought by water and optionally by a solvent to the desired volume and sought-after flowability.

18. Use of the hardener component according to at least one of the preceding claims as a hardener constituent of a two- or multi-component mortar composition for fixing construction elements in a solid subsoil.

## Revendications

1. Durcisseur pour composition de mortier comprenant au moins deux composants pour la technique de fixation chimique, **caractérisés par** une teneur en
a) au moins un générateur de radicaux libres comme durcisseur pour un composant de résine organique ;
b) de l'eau et
c) au moins un dérivé de polyalkylèneglycol soluble dans l'eau, éthyléniquement insaturé et copolymérisable avec le composant de résine organique ayant une solubilité dans l'eau à 25 °C d'au moins 10 g dans 100 g d'eau, de formule générale I :
R₂-A-O-R₁ (I)
dans laquelle
R₁ représente un groupe de formule CH₂=CH-CH₂-, CH₂=CH-CO-O- ou CH₂=C(CH₃)-CO-O-,
R₂ représente l'hydrogène, un groupe alkyle avec 1 à 6 atomes de carbone, un groupe sulfonate ou un groupe de formule CH₂=CH-CH₂-, CH₂=CH-CO-O- ou CH₂=C(CH₃)-CO-O-, et
A représente un groupe polyoxyalkylène à chaîne linéaire ou ramifié, homopolymère ou copolymère, éventuellement substitué.

2. Durcisseur selon la revendication 1, **caractérisé en ce que** le groupe A représente un groupe polyoxyalkylène, copolymère, constitué statistiquement et/ou en séquences, éventuellement substitué.

3. Durcisseur selon la revendication 1 ou 2, **caractérisé en ce que** le groupe polyoxyalkylène A éventuellement substitué est constitué de résidus polyoxyéthylène et/ou de résidus polyoxypropylène.

4. Durcisseur selon au moins l'une des revendications 1 à 3, **caractérisé en ce que** le dérivé polyalkylèneglycol correspond à l'une des formules (II) à (IV) : 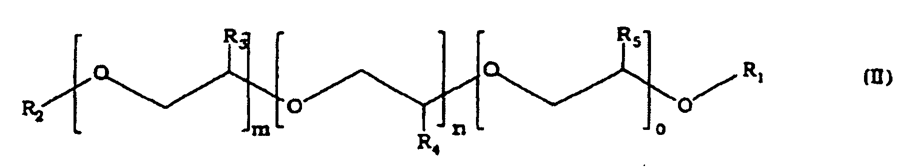 ou 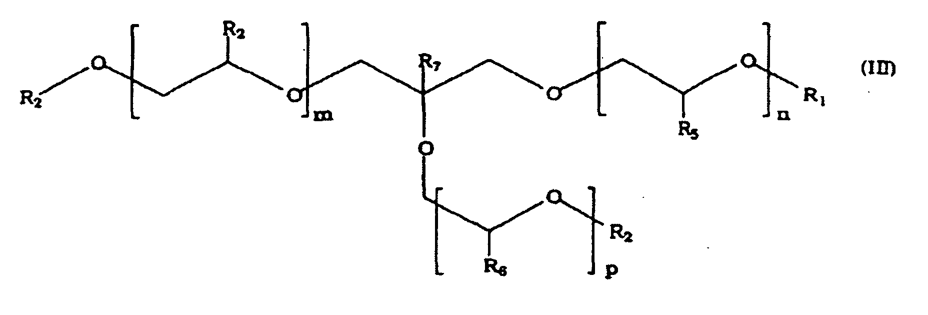 ou 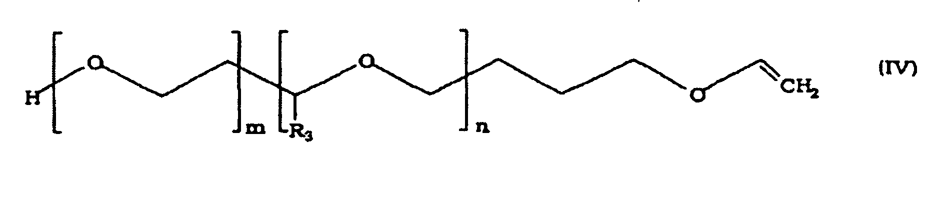 dans lesquelles
R₁ et R₂ possèdent les significations indiquées dans la revendication
R₃, R₄, R₅, R₆ et R₇ indépendamment les uns des autres représentent un hydrogène ou des groupes alkyle avec 1 à 6 atomes de carbone et
n, m, o et p indépendamment les uns des autres représentent des nombres entiers avec des valeurs de 0 à 200 sous réserve que la somme n + m + o + p soit comprise entre 5 et 300.

5. Durcisseur selon au moins l'une des revendications précédentes, **caractérisé en ce qu'**il contient un dérivé polyalkylèneglycol choisi dans le groupe comprenant les polyéthylèneglycolallyléthers, polyéthylèneglycolacrylates, polyéthylène-glycolméthacrylates, méthoxyéthylèneglycol-1100-méthacrylates, polyéthylèneglycol-diméthacrylates et/ou polyéthylèneglycol-co-propylèneglycol-allyléthers avec des masses molaires de 250 à 5000 g/mole.

6. Durcisseur selon au moins l'une des revendications précédentes, **caractérisé en ce qu'**il contient comme dérivé polyalkylèneglycol, un représentant du groupe des polyéthylèneglycol-750-allyléther, polyéthylèneglycol-5000-allyléther et/ou méthoxypolyéthylèneglycol-560-méthacrylate.

7. Durcisseur selon au moins l'une des revendications précédentes, **caractérisé en ce qu'**il contient comme générateur de radicaux libres un peroxyde ou un composé azoïque.

8. Durcisseur selon la revendication 7, **caractérisé en ce qu'**il contient comme générateur de radicaux libres un peroxyde organique et/ou un composé azoïque organique.

9. Durcisseur selon la revendication 8, **caractérisé en ce qu'**il contient comme générateur de radicaux libres un peroxyde d'alkyle, un peroxyde de dialkyle, un peroxyde de diacyle, un hydroperoxyde d'alkyle, un hydroperoxyde, un percarbonate, un percétal et/ou un peroxyde inorganique.

10. Durcisseur selon la revendication 9, **caractérisé en ce qu'**il contient comme générateur de radicaux libres un peroxyde de diacétyle, peroxyde de di-p-chlorobenzoyle, peroxyde de di-t-butyle, hydroperoxyde de cumène, peroxyde de phtaloyle, peroxyde de succinyle, peroxyde de dilauryle, peroxyde de d'acétylcyclohexanesulfonyle, perbenzoate de t-butyle, peroctoate de t-butyle, percarbonate de cyclohexane, bis(4-t-butylcyclohexyl)percarbonate, un peroxyde de silicium, peroxyde d'acétylacétone, peroxyde de cyclohexanone, peroxyde de méthyléthylcétone, peroxyde de dibenzoyle, peroxyde de dilauroyle et/ou azobisisobutyronitrile.

11. Durcisseur selon au moins l'une des revendications précédentes, **caractérisé en ce qu'**il contient additionnellement des charges organiques et/ou inorganiques, des agents épaississants, des agents de thixotropie, des solvants non réactifs, des agents pour l'amélioration de l'aptitude à l'écoulement, des accélérateurs, des agents mouillants et/ou des stabilisateurs.

12. Durcisseur selon la revendication 11, **caractérisé en ce qu'**il contient comme charge organique ou inorganique des particules de quartz, de matériau de quartz, de corindon, de carbonate de calcium, de sulfate de calcium, de verre et/ou d'un polymère organique.

13. Durcisseur selon la revendication 12, **caractérisé en ce que** les particules de charges sont de forme irrégulière, de forme sphérique, en forme de billes creuses et/ou en forme de fibres.

14. Durcisseur selon la revendication 12 ou 13, **caractérisé en ce que** les particules de charge sont constituées d'un polymère, de préférence de polyméthacrylate de méthyle, d'un polyester et/ou d'un polyamide.

15. Durcisseur selon la revendication 11, **caractérisé en ce qu'**il contient un agent épaississant, un agent de thixotropie à base de silicates, bentonite, laponite, acide silicique pyrogène, polyacrylates et/ou polyuréthanes.

16. Durcisseur selon au moins l'une des revendications précédentes, **caractérisé par** une teneur de
a) 1 à 30 % en poids d'au moins un générateur de radicaux libres selon les revendications 7 à 10,
b) 5 à 50 % en poids d'eau,
c) 3 à 50% en poids d'au moins un dérivé polyalkylèneglycol selon les revendications 1 à 6,
d) 0 à 70 % en poids d'au moins une charge selon les revendications 12 à 14,
e) 0 à 10 % en poids d'au moins un agent épaississant ou d'un agent de thixotropie selon la revendication 15, et
d) 0 à 10 % en poids d'au moins un représentant du groupe comprenant les solvants non réactifs, les agents d'amélioration de l'aptitude à l'écoulement, les accélérateurs, les agents mouillants et/ou les stabilisateurs.

17. Procédé pour la préparation du durcisseur selon au moins l'une des revendications précédentes, **caractérisé en ce que** l'on mélange de manière homogène le au moins un générateur de radicaux libres, l'eau, au moins un dérivé polyalkylèneglycol, éventuellement au moins une charge, éventuellement au moins un agent épaississant ou un agent de thixotropie et au moins un représentant du groupe comprenant les solvants non réactifs, les agents d'amélioration de l'aptitude à l'écoulement, les accélérateurs, les agents mouillants et/ou les stabilisateurs et **en ce qu'**on ajuste le volume souhaité et l'aptitude à l'écoulement visés par le choix de la quantité du dérivé polyalkylèneglycol, de l'eau et éventuellement d'un solvant.

18. Utilisation du durcisseur selon au moins l'une des revendications précédentes comme constituant de durcisseur d'une composition de mortier à deux composants ou plus pour la fixation d'éléments de construction dans un substrat solide.
